# EUROPÄISCHE PATENTANMELDUNG

(11) **EP 0 838 417 A2**
(43) Veröffentlichungstag der Anmeldung: **29.04.1998**
(21) Anmeldenummer: 97116701.0
(22) Anmeldetag: 24.09.1997
(51) Int. Cl.: B65G 47/24, B65G 47/61

(54) **Ausrichtvorrichtung für plattenförmige Bauteile**

(30) Priorität: 23.10.1996 DE 19643684
(71) Anmelder: NSM MAGNETTECHNIK GMBH, D-59399 Olfen (DE)
(72) Erfinder: Ulrich, Hans, 59379 Selm (DE)
(74) Vertreter: Hennicke, Ernst Rüdiger

(57) **Zusammenfassung**

Vorrichtung zum Ausrichten von plattenförmigen Bauteilen (11,12), die mittels eines Hängendförderers (13) zugeführt und einem Liegendförderer (15) übergeben werden. Erfindungsgemäß sind hierbei für die Bauteile zwischen Hängend- und Liegendförderer ein oder mehrere Einwurfschächte (20) mit vorderen Anschlagelementen (22) und hinteren Führungselementen (23) vorgesehen, die für eine Zentrierung der Bauteile zwischen sich sorgen. Die Bauteile werden nach unten aus den Einwurfschächten auf eine Ablagevorrichtung (27) abgelegt, die anschließend nach unten verfährt und die Bauteile auf dem Liegendförderer in der genauen Lage ablegt.

## Beschreibung

Die Erfindung betrifft eine Ausrichtvorrichtung für plattenförmige Bauteile, die mittels eines Hängendförderers zugeführt und einem Liegendförderer an mindestens einer Übergabestelle übergeben werden.

Es kommt häufig vor, daß plattenförmige Bauteile wie beispielsweise Bleche in der Automobilindustrie von einem Stapel o.dgl. entnommen und einer weiteren Verarbeitungsstation zugeführt werden sollen, in der ihre Weiterverarbeitung jedoch eine genaue Zentrierung oder Ausrichtung erfordert. Derartige Verarbeitungsstationen können beispielsweise Umformpressen sein, in denen bei einem Pressenhub ein oder mehrere Bauteile gleichzeitig bei einem Arbeitshub in die gewünschten Formen umgeformt werden. Da die Bauteilrohlinge, die dem Stapel entnommen werden, bei ihrer Übergabe auf ein Transportband o.dgl. im allgemeinen nicht korrekt für die nachfolgende Maschine ausgerichtet sind, ist es erforderlich, hier vor der Beschickung zur Presse oder einer anderen Bearbeitungsstation eine Ausrichtvorrichtung zu schaffen, nach deren Durchgang die plattenförmigen Bauteile ihre exakte, gewünschte Lage am Förderer haben, mit dem sie der nachfolgenden Verarbeitungsstation zugeführt werden.

Aufgabe der Erfindung ist es, eine Ausrichtvorrichtung zu schaffen, mit der bei der Übergabe eines Bauteils von einem Hängendförderer, insbesondere einem Magnetbandförderer, auf einen Liegendförderer eine besonders zuverlässige Ausrichtung der Bauteile möglich ist, ohne daß hierzu der kontinuierlich fördernde Hängendförderer zum Übergabezeitpunkt stillgesetzt oder dessen Fördergeschwindigkeit verringert werden muß.

Die Erfindung löst diese Aufgabe, indem jeder Übergabestelle unterhalb des Hängendförderers und oberhalb des Liegendförderers ein vorderes Anschlagelement und ein hinteres Führungselement für ein Bauteil zugeordnet ist und indem am Liegendförderer mindestens eine von unten gegen die Anschlag- und Führungselemente anstellbare Ablagevorrichtung angeordnet ist. Damit ist es möglich, das oder die vom Hängendförderer herantransportierten Bauteile an den ihnen zugeordneten Übergabestellen so von dem weiterlaufenden Hängendförderer fallen zu lassen, daß ihre in Transportrichtung vorderen Kanten bei dem dann etwa parabelförmigen, nach unten und in Transportrichtung verlaufenden Fall an den jeweiligen vorderen Anschlagelementen der entsprechenden Übergabestellen anschlagen und unmittelbar darauf mit ihren Hinterkanten in Kontakt mit den Führungselementen gelangen. Die Bleche o.dgl. haben so bei ihrem weiteren (kontrollierten) Fall in Richtung auf den Liegendförderer eine vordere und hintere Führung, die die Ausrichtung der Bauteile auf dem Liegendförderer bestimmen. Die Bauteile werden auf die von unten gegen die Führungs- und Anschlagelemente angestellte Ablagevorrichtung abgelegt, die anschließend wieder nach unten verfährt und so die Übergabe auf den Liegendförderer bewirkt. Die Bleche fallen also nur während eines sehr kurzen Zeitraums frei, nämlich bis zum Kontakt mit dem zugehörigen Anschlagelement; die weitere Übergabe nach ihrem Ausrichten erfolgt kontrolliert, nämlich durch die Führungs- und Anschlagelemente bzw. die vertikal verfahrbare Ablagevorrichtung.

Da die Anschlag- und Führungselemente unterhalb des Hängendförderers angeordnet sind, behindern sie die Beförderung der Bauteile durch diesen nicht, da der Spalt zwischen Förderer und Anschlag/Führungselementen problemlos größer sein kann als die Bauteildicke. Erst wenn die Bauteile vom Hängendförderer abgeworfen werden, können sie in Kontakt mit den Anschlag- und Führungselementen kommen.

Der Hängendförderer weist zweckmäßig mindestens ein umlaufendes Transportband auf und ist mit die Bauteile gegen die untere Transportseite des Transportbandes haltenden Halteeinheiten versehen ist. Derartige Halteeinheiten können - für ferromagnetische Bauteile - schaltbare Magneteinheiten und/oder Unterdruckeinheiten sein, von denen auf dem gesamten Transportweg des Magnetband- bzw. Unterdruckförderers eine Vielzahl hintereinander angeordnet sind und die einzeln an- und abgeschaltet werden können, um die transportierten Bauteile an praktisch jeder beliebigen Stelle abwerfen zu können. Mit derartigen Hängendförderern ist es auch besonders leicht möglich, zwei oder mehr Bauteile gleichzeitig an entsprechenden Übergabestellen abzuwerfen, was besonders zweckmäßig ist, wenn zwei oder mehrere Bauteile gleichzeitig im ausgerichteten Zustand der nachfolgenden Bearbeitungsstation zugeführt werden sollen.

Auch der Liegendförderer kann zweckmäßig mindestens ein umlaufendes Transportband aufweisen und mit die Bauteile gegen die obere Transportseite des Transportbandes haltenden Halteeinheiten versehen sein. Diese Haltemittel - vorzugsweise schaltbare Magneteinheiten und/oder Unterdruckeinheiten - verhindern dann beim Weitertransport der Bauteile zur nachfolgenden Bearbeitungsstation wirksam deren ungewolltes Verrücken auf dem Transportband nach ihrem Ausrichten.

Die Ablagevorrichtung besteht vorzugsweise im wesentlichen aus seitlich neben dem Liegendförderer angeordneten, höhenverstellbaren Tragleisten und ist mittels Betätigungszylindern, insbesondere Hydraulikzylindern oder Pneumatikzylindern, höhenverstellbar. Diese besonders einfache Konstruktion gewährleistet einen störungsfreien Betrieb der Vorrichtung über lange Zeiträume.

Wenn die Führungs- und/oder Anschlagelemente in ihrem Abstand vom Hängendförderer und/oder vom Liegendförderer einstellbar sind, kann die Vorrichtung leicht für verschiedene Bauteildicken optimal eingestellt werden, indem zwischen Hängendförderer und Anschlag- bzw. Führungselement ein Abstand gewählt wird, der nur wenig größer als die Dicke der transportierten Bauteile ist. Natürlich können die Anschlag- und Führungselemente auch in ihrem Abstand voneinander einstellbar sein, um Bauteile verschiedener Längen bzw. Breiten exakt zwischen sich zu führen.

Die Führungs- und/oder Anschlagelemente sind zweckmäßig mit elastischen Stoppermitteln für die Ablagevorrichtung versehen, vorzugsweise mit aus ihrer Unterseite vorspringenden, federbelasteten Anlagestiften oder Anlageleisten, an die sich die Ablagevorrichtung bei ihrem Anheben anlegen kann. Dadurch kann sichergestellt werden, daß die Ablagevorrichtung immer dicht an den Führungs- und Anschlagelementen anliegt, wenn von oben ein Bauteil zwischen Führung und Anschlag auf die Ablagevorrichtung fällt.

Um auch eine Ausrichtung quer zur Förderrichtung der Fördereinrichtungen zu erreichen, kann die Vorrichtung zweckmäßig seitlich des Liegendförderers bzw. der Ablagevorrichtung angeordnete, quer zu dessen Transportrichtung wirkende Zentriervorrichtungen aufweisen. Derartige Zentriervorrichtungen können beispielsweise Zentrierzylinder sein, die gegen das Bauteil angefahren werden und es zwischen sich zentrieren. Besonders vorteilhaft ist es, die Zentrierzylinder so an der Ablagevorrichtung anzuordnen, daß damit die Ausrichtung quer zur Transportrichtung möglich ist, während das auf der Ablagevorrichtung abgelegte Bauteil noch von dem vorderen Anschlag- und hinteren Führungselement geführt wird.

Die Führungs- und/oder Anschlagelemente können mit schlitzartigen Ausnehmungen für die Ablagevorrichtung bzw. die diese bildenden Tragleisten versehen sein. Das bzw. die hinteren Führungselemente haben zweckmäßig eine gebogene oder schräge Führungsfläche, die gewährleistet, daß die Bleche immer sicher in den von Anschlag und Führung gebildeten Bauteilkanal einfallen und darin exakt geführt werden. Anschlag- und/oder Führungselemente können am Hängendförderer mittels die Bauteile seitlich umfassenden Haltebügeln befestigt sein, was einen geringen Bauaufwand und gleichzeitig besonders leichte Zugänglichkeit insbesondere zu Einstellzwecken der Anschlag- und Führungselemente bedeutet.

Weitere Merkmale und Vorteile der Erfindung ergeben sich aus der nachfolgenden Beschreibung und der Zeichnung, worin eine bevorzugte Ausführungsform der Erfindung an einem Beispiel näher erläutert ist. Es zeigt:
- Fig. 1: eine Ausrichtvorrichtung nach der Erfindung in einer schematischen Seitenansicht;
- Fig. 2: einen Ausschnitt der erfindungsgemäßen Vorrichtung in einem Schnitt längs der Linie II - II nach Fig. 1;
- Fig. 3: einen Teilquerschnitt längs der Linie III - III nach Fig. 2; und
- Fig. 4: eine Einzelheit IV der erfindungsgemäßen Ausrichtvorrichtung nach Fig. 1.

In der Zeichnung ist in ihrer Gesamtheit mit 10 eine Ausrichtvorrichtung für plattenförmige Bauteile, beispielsweise für Bleche 11, 12 bezeichnet, die mittels eines Hängendförderers 13 hängend von einer nicht dargestellten Aufgabestelle bis zu einem Übergabebereich 14 transportiert werden, wo sie einem Liegendförderer 15 übergeben werden.

Der Hängendförderer 13 ist in dem dargestellten Ausführungsbeispiel ein Magnetbandförderer mit zwei oder mehr nebeneinander angeordneten, umlaufenden Transportbändern 16 und mit einer Vielzahl von einzeln schaltbaren Magneteinheiten 17, die innen an der unteren Transportseite 18 der Transportbänder 16 angeordnet sind und die ferromagnetischen Bleche 12, 13 während ihres Transportes an den Transportbändern halten. Für nicht magnetische Bauteile können anstelle der Magneteinheiten auch Unterdruckeinheiten vorgesehen sein, die die Bauteile gegen die Transportbänder ansaugen.

Die Magneteinheiten 17 sind über Steuerleitungen 19 an eine speicherprogammierbaren Steuerung (SPS) 20 angeschlossen, die ein Abschalten von einzelnen Magneteinheiten 17 zu einem gewünschten Zeitpunkt und damit ein Fallenlassen der von den jeweiligen, abgeschalteten Magneteinheiten gerade zuvor noch gehaltenen Blechen 11, 12 ermöglicht.

Im Übergabebereich 14 sind zwischen dem Liegendförderer 15 und dem Hängendförderer 13 zwei Einwurfschächte 21 für je ein Blech 11 und 12 vorgesehen, die an ihrem in Transportrichtung 22 vorderen Ende von einem Anschlagelement 23 und an ihrem hinteren Ende von einem Führungselement 24 begrenzt werden, das mit einer schrägen Führungsfläche 25 versehen ist, so daß sich die Länge der Einwurfschächte 21 von oben nach unten verringert. Dabei ist die Anordnung so getroffen, daß die Länge der Bleche 11, 12 dem Abstand der Anschlag- bzw. Führungselemente 23, 24 an deren unteren Ende voneinander entspricht.

Das gesamte Anschlag- und Führungssystem kann auch motorisch über gesteuerte Achsen verstellt werden.

Der Liegendförderer 15 weist ebenso wie der Hängendförderer zwei oder mehr parallele Förderbänder 26 sowie mehrere in Transportrichtung hintereinander angeordnete Magnethalteeinheiten 27 auf. Im Übergabebereich 14 ist der Liegendförderer 15 mit einer Ablagevorrichtung 28 versehen, die im wesentlichen aus seitlich neben den Förderbändern 26 angeordneten Tragleisten 29 besteht, die mittels Hydraulik- oder Pneumatikzylindern 30 höhenbeweglich sind und aus einer tiefen Position, in der ihre Oberkante unterhalb der oberen Transportseite 31 der Förderbänder 26 liegt, in die dargestellte hohe Position verfahren werden können, in der sie unten an den Anschlag- und Führungselementen 23 und 24 anliegen.

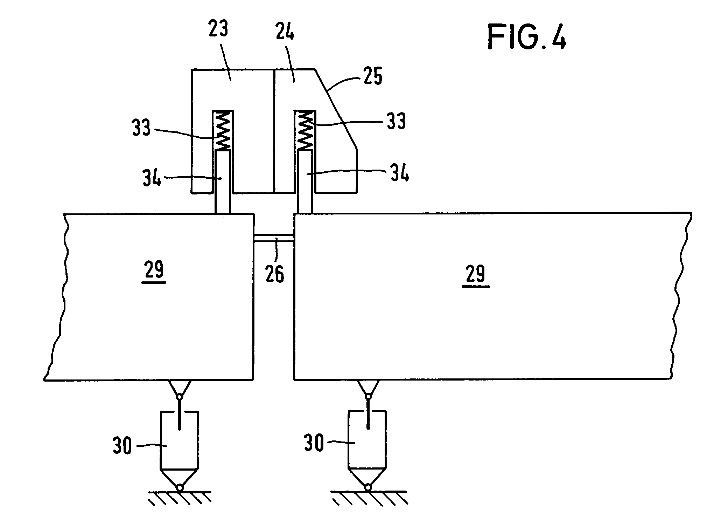

Wie sich insbesondere aus Fig. 4 ergibt, sind die Anschlag- und Führungselemente 23 und 24 mit aus ihrer Unterseite 32 vorspringenden, mit Federn 33 belasteten Anschlagstiften 34 versehen, an denen die Tragleisten 29 beim Verfahren nach oben anschlagen.

Die Transportbänder 16 des Hängendförderers 13 laufen mit etwa gleicbleibender Geschwindigkeit um und fördern dabei die Bleche 11, 12 von der nicht dargestellten Aufgabestation bis zu den Übergabestellen 14. Sobald hier zwei aufeinander folgend transportierte Bleche 11a, 12a ihre Abwurfposition erreicht haben, werden die Magneteinheiten 17 an diesen Stellen für kurze Zeit ausgeschaltet und die Bleche fallen etwa in einem parabelförmigen Bogen in Förderrichtung 22 nach vorne und unten von den Transportbändern 16 ab. Dabei stoßen sie mit ihren Vorderkanten 35 an den entsprechenden Anschlagelementen 23 an und fallen so weiter in den ihnen zugewiesenen Einwurfschacht 21, wobei sie an ihrer Vorderkante 35 weiter von den Anschlagelementen 23 und - beim weiteren Nach-Unten-Fallen an ihrer Hinterkante 36 von dem hinteren Führungselement 24 geführt werden. Auf diese Weise werden die Bleche genau in ihrer gewünschten Ausrichtung, nämlich mit ihren Vorder- und Hinterkanten 35, 36 genau rechtwinklig zur Förderrichtung 22, auf den Tragleisten 29 der Ablagevorrichtung 28 abgelegt, die hierzu in ihre obere Position verfahren sind.

Anschließend werden die Tragleisten 29 wieder abgesenkt und so die Bleche 11a, 12a in ihrer genauen, gewünschten Lage auf den Förderbändern 26 des Liegendförderers 15 abgelegt, mit dem sie - von den Magnethalteeinheiten 27 in gewünschter Ausrichtung gehalten - der nachfolgenden Bearbeitungseinrichtung zugeführt werden. Dabei können die Förderbänder 26 des Liegendförderers wie die des Hängendförderers 13 ebenfalls kontinuierlich umlaufen; für eine ganz besonders genaue Ausrichtung der Bleche auf dem Liegendförderer hat es sich jedoch als zweckmäßig erwiesen, den Liegendförderer 15 intermittierend zu betreiben und seine Förderbänder 26 für eine kurze Dauer stillzusetzen, während der die Bleche mittels der Ablagevorrichtung 28 abgelegt werden.

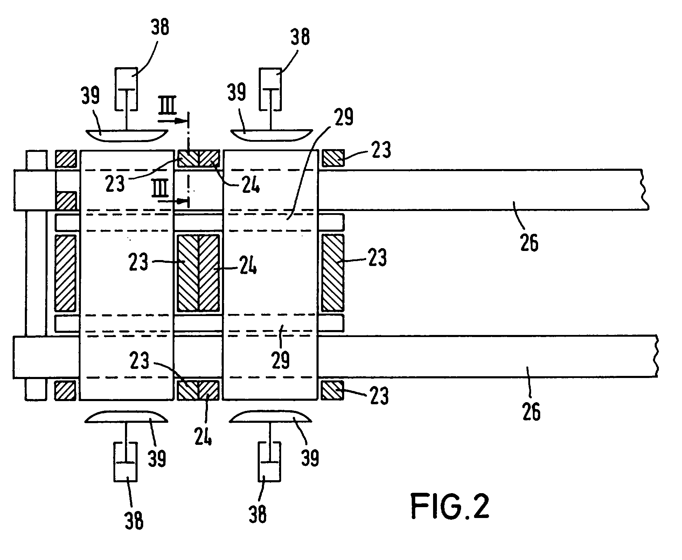

Um auch eine Ausrichtung bzw. Zentrierung der Bleche quer zur Transportrichtung 22 zu ermöglichen, ist die Vorrichtung 10 - wie sich aus Fig. 2 ergibt - mit seitlichen Zentriervorrichtungen 37 versehen, die im wesentlichen aus hydraulischen oder pneumatischen Zentrierzylindern 38 und an deren ausfahrbaren Kolbenstangen angeordneten Druckstücken 39 bestehen, die beim Ausfahren der Kolbenstangen die Bleche 11 bzw. 12 zwischen sich einklemmen und so in ihre gewünschte Lage quer zur Transportrichtung ausrichten. Die Zylinder sind hierzu an der Ablagevorrichtung angeordnet und können die Bleche quer ausrichten, während sich die Tragleisten noch in Anlage mit den Anschlag- und Führungselementen befinden, so daß die Bleche gleichzeitig an allen ihren vier Seiten einen Anschlag haben.

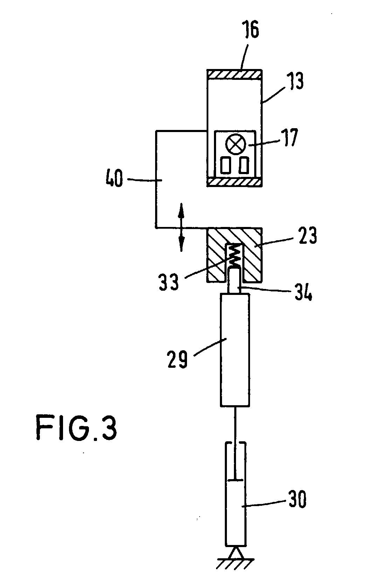

Die Erfindung ist nicht auf das dargestellte und beschriebene Ausführungsbeispiel beschränkt, sondern es sind viele Änderungen und Ergänzungen möglich, ohne den Rahmen der Erfindung zu verlassen. So können die Anschlag- und Führungselemente 23, 24 mittels geeigneten Verstelleinrichtungen in ihrem Abstand voneinander einstellbar sein, um Bleche unterschiedlicher Größe damit ausrichten zu können. Auch der Abstand der Anschlag- und Führungselemente 23, 24 vom Hängendförderer 13 ist zweckmäßig einstellbar, was leicht dadurch geschehen kann, daß die Elemente - wie in Fig. 3 angedeutet - an seitlich am Hängendförderer angeordneten Haltebügeln 40 angeordnet sind, die die transportierten Bauteile seitlich umfassen und mittels einer Verschiebevorrichtung (nicht gezeigt) höheneinstellbar am Förderer befestigt sind.

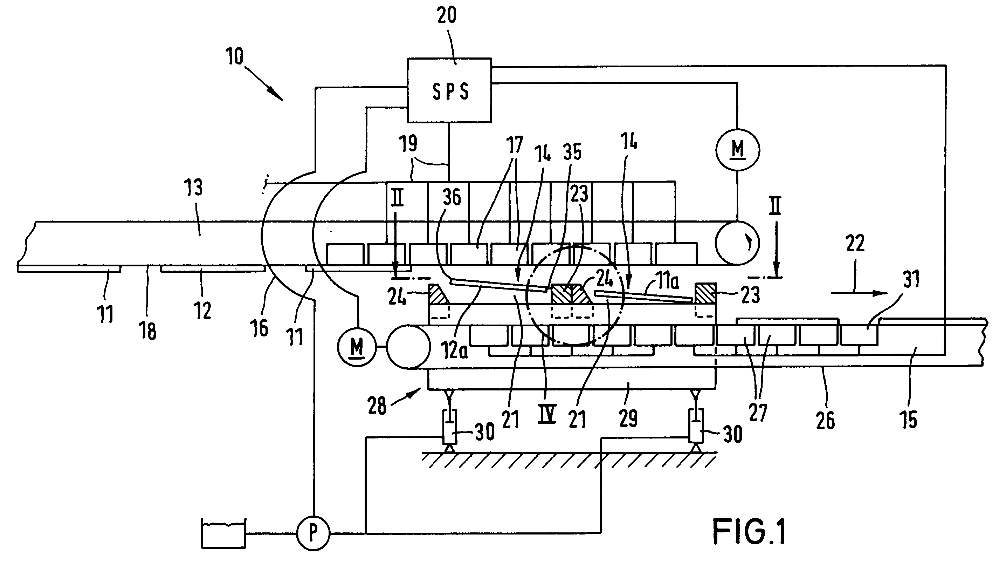

Alle steuerbaren Maschineneinrichtungen wie Magnethalteeinheiten, Antriebe für die Förderer und die Hub- bzw. Zentrierzylinder können von einer gemeinsamen Steuerung 20 gesteuert werden, wie dies in Fig.1 angedeutet ist.

## Patentansprüche

1. Ausrichtvorrichtung (10) für plattenförmige Bauteile (11,12), die mittels eines Hängendförderers (13) zugeführt und einem Liegendförderer (15) an mindestens einer Übergabestelle (14) übergeben werden, wobei jeder Übergabestelle (14) unterhalb des Hängendförderers (13) und oberhalb des Liegendförderers (15) ein vorderes Anschlagelement (23) und ein hinteres Führungselement (24) für ein Bauteil (11 bzw. 12) zugeordnet ist und wobei am Liegendförderer (15) mindestens eine von unten gegen die Anschlag- und Führungselemente (23, 24) anstellbare Ablagevorrichtung (28) angeordnet ist.

2. Vorrichtung nach Anspruch 1, **dadurch gekennzeichnet, daß** der Hängendförderer (13) mindestens ein umlaufendes Transportband (16) aufweist und mit die Bauteile (11,12) gegen die untere Transportseite (18) des Transportbandes (16) haltenden Halteeinheiten (17) versehen ist.

3. Vorrichtung nach Anspruch 1 oder 2, **dadurch gekennzeichnet, daß** die Halteeinheiten (17) schaltbare Magneteinheiten und/oder Unterdruckeinheiten sind.

4. Vorrichtung nach einem der Ansprüche 1 bis 3, **dadurch gekennzeichnet, daß** der Liegendförderer (15) mindestens ein umlaufendes Förderband (26) aufweist.

5. Vorrichtung nach einem der Ansprüche 1 bis 4, **dadurch gekennzeichnet, daß** der Liegendförderer (15) mit die Bauteile (11,12) gegen die obere Transportseite (31) des Förderbandes (26) haltenden Haltemitteln (27) versehen ist.

6. Vorrichtung nach einem der Ansprüche 1 bis 5, **dadurch gekennzeichnet, daß** die Haltemittel (27) schaltbare Magneteinheiten und/oder Unterdruckeinheiten sind.

7. Vorrichtung nach einem der Ansprüche 1 bis 6, **dadurch gekennzeichnet, daß** die Ablagevorrichtung (28) im wesentlichen aus seitlich neben dem Liegendförderer (15) angeordneten, höhenverstellbaren Tragleisten (29) besteht.

8. Vorrichtung nach einem der Ansprüche 1 bis 7, **dadurch gekennzeichnet, daß** die Ablagevorrichtung (28) mittels Betätigungszylindern (30) höhenverstellbar ist.

9. Vorrichtung nach einem der Ansprüche 1 bis 8, **dadurch gekennzeichnet, daß** die Führungs- und/oder Anschlagelemente (23 bzw. 24) in ihrem Abstand vom Hängendförderer (13) und/oder vom Liegendförderer (15) einstellbar sind.

10. Vorrichtung nach einem der Ansprüche 1 bis 9, **dadurch gekennzeichnet, daß** die Führungs- und/oder Anschlagelemente (23 bzw. 24) in ihrem Abstand voneinander einstellbar sind.

11. Vorrichtung nach einem der Ansprüche 1 bis 10, **dadurch gekennzeichnet, daß** die Führungs- und/oder Anschlagelemente (23 bzw. 24) mit elastischen Stoppermitteln (33,34) für die Ablagevorrichtung (28) versehen sind.

12. Vorrichtung nach einem der Ansprüche 1 bis 11, **dadurch gekennzeichnet, daß** die Stoppermittel aus der Unterseite (32) der Führungs- und/oder Anschlagelemente (23, 24) vorspringende, federbelastete Anschlagstifte (34) oder Anlegeleisten sind.

13. Vorrichtung nach einem der Ansprüche 1 bis 12, **gekennzeichnet durch** seitlich des Liegendförderers (15) quer zu dessen Transportrichtung (22) wirkende Zentriervorrichtungen (37).

14. Vorrichtung nach einem der Ansprüche 1 bis 11, **dadurch gekennzeichnet, daß** die Zentriervorrichtungen (37) Zentrierzylinder (38) aufweisen.

15. Vorrichtung nach einem der Ansprüche 1 bis 14, **dadurch gekennzeichnet, daß** die Führungs- und/oder Anschlagelemente (23,24) mit schlitzartigen Ausnehmungen oder federbetätigten Druckstücken für die Ablagevorrichtung (28) bzw. die diese bildenden Tragleisten (29) versehen sind.

16. Vorrichtung nach einem der Ansprüche 1 bis 15, **dadurch gekennzeichnet, daß** das bzw. die Führungselement(e) (24) eine gebogene oder schräge Führungsfläche (25) aufweist/aufweisen.

17. Vorrichtung nach einem der Ansprüche 1 bis 16, **dadurch gekennzeichnet, daß** die Anschlag- und/oder Führungselemente (23, 24) am Hängendförderer (13) mittels die plattenförmigen Bauteile (11,12) seitlich umgreifenden Haltebügeln (40) befestigt sind.
